# DEMANDE DE BREVET EUROPEEN

(11) **EP 1 598 950 A1**
(43) Date de publication de la demande: **23.11.2005**
(21) Numéro de dépôt: 05291067.6
(22) Date de dépôt: 18.05.2005
(51) Int. Cl.: H04B 3/56

(54) **Procédé et dispositif de couplage pour la transmission de données dans un réseau d'alimentation triphasée**

(30) Priorité: 21.05.2004 FR 0405522
(71) Demandeur: Oxance, 85170 Les Lucs sur Boulogne (FR)
(72) Inventeur: Chotard, Joel, 85170 Saint Denis la Chevasse (FR)
(74) Mandataire: Laget, Jean-Loup

(57) **Abrégé**

L'invention concerne un procédé d'injection d'un signal CPL dans un réseau câblé triphasé de transport d'énergie électrique, alimenté par un transformateur HT/MT.

L'invention consiste en ce que le procédé présente les étapes consistant à :
- injecter le signal CPL au secondaire BT du transformateur MT/BT entre deux conducteurs de phases, en mode symétrique,
- au voisinage de la zone de desserte des utilisateurs, convertir le signal CPL du mode symétrique au mode commun,
- desservir les utilisateurs en signal CPL en mode commun.

Application au transport d'énergie électrique.

## Description

L'invention concerne un procédé d'injection d'un signal CPL (courant porteur en ligne) dans un réseau câblé triphasé de transport d'énergie électrique, et un dispositif de couplage pour la mise en oeuvre de ce procédé.

Il est de plus en plus fréquent d'utiliser la technique des courants porteurs pour transmettre à des utilisateurs d'énergie électrique des informations de natures diverses. Les utilisateurs ont des équipements alimentés en basse tension (BT) par le réseau, soit en triphasé (trois phases et un neutre), soit en monophasé (une phase et un neutre).

Les câbles de transport d'énergie électrique sont soit souterrains, soit aériens. Un câble souterrain comporte soit 4 conducteurs dont un neutre qui est relié au blindage périphérique du câble, soit 3 conducteurs et un neutre qui constitue le blindage. Un câble aérien comporte 4 conducteurs dont un neutre et 3 phases, et il est torsadé avec un pas compris entre 3 m et 4,6 m, en général.

Le problème technique qui se pose est celui de l'injection optimale du signal CPL dans un réseau câblé triphasé de transport d'énergie électrique, de façon à couvrir la distance entre le transformateur MT/BT (20 000 V / 380 V) et la zone de desserte des utilisateurs, avec la plus grande bande passante.

Les méthodes connues d'injection d'un signal CPL dans un câble de transport d'énergie électrique sont au nombre de trois.

Dans la première méthode, dite courante ou du mode commun, l'aller du signal CPL se fait par les trois phases, et le retour par le neutre. En fonction du câble, le neutre est un conducteur ou le blindage. Le neutre étant connecté à la terre, il ramène un bruit important, ce qui constitue le principal inconvénient de cette méthode.

La deuxième méthode, dite symétrique, correspond à un mode différentiel bifilaire dans lequel les deux conducteurs utilisés pour transmettre le signal CPL sont les conducteurs des phases 1 et 3, par exemple. Cette méthode donne de bons résultats, mais comme les diaphonies sont faibles en mode différentiel, le signal CPL reste confiné entre les conducteurs des phases 1 et 3 et il est trop faible sur le conducteur de la phase 2 pour pouvoir être exploité par les utilisateurs alimentés par cette phase.

La troisième méthode, dite transverse, correspond à un mode différentiel bifilaire. L'un des conducteurs est le conducteur de la phase 2. L'autre conducteur est constitué par l'ensemble des conducteurs des phases 1 et 3 reliés entre eux par couplage capacitif ou inductif, ce qui alourdit l'installation.

Le document US 2003/103 307 décrit un procédé de transmission d'un signal CPL dans un réseau câblé triphasé, dans lequel le signal CPL est injecté au secondaire BT du transformateur MT/BT, en mode symétrique entre deux conducteurs de phases, pour être extrait au voisinage du bâtiment à desservir et réinjecté dans le bâtiment, entre le conducteur neutre et le conducteur de terre.

Un but de la présente invention est de proposer un procédé d'injection d'un signal CPL ne présentant pas les inconvénients des méthodes précédentes.

L'invention a pour objet un procédé d'injection d'un signal CPL dans un réseau câblé triphasé de transport d'énergie électrique comprenant un transformateur HT/MT et un transformateur MT/BT, dans lequel le signal CPL est injecté, au secondaire BT du transformateur MT/BT, entre deux conducteurs de phase, en mode symétrique,
caractérisé par les étapes consistant, en outre :
- au voisinage de la zone de desserte des utilisateurs, à convertir le signal CPL du mode symétrique au mode commun,
- à desservir les utilisateurs en signal CPL en mode commun.

Selon un mode particulier de réalisation de l'invention, le procédé d'injection du signal CPL comprend les étapes supplémentaires suivantes :
- au secondaire MT du transformateur HT/MT, le signal CPL est injecté par l'intermédiaire d'un coupleur sur un conducteur de phase,
- au primaire MT du transformateur MT/BT, le signal CPL est extrait dudit conducteur de phase pour être injecté au secondaire BT du transformateur MT/BT.

L'invention a encore pour objet un dispositif d'injection d'un signal CPL dans un réseau câblé triphasé de transport d'énergie électrique comportant un transformateur HT/MT et un transformateur MT/BT et desservant des utilisateurs situés dans une zone de desserte, caractérisé en ce qu'il comporte :
- un circuit (PLA) comprenant un adaptateur de ligne de puissance, un modem CPL et, éventuellement un microprocesseur, situé au secondaire du transformateur MT/BT, pour injecter sur deux conducteurs de phases le signal CPL en mode symétrique, et
- un convertisseur de signal CPL, situé au voisinage de la zone de desserte des utilisateurs, pour convertir le signal CPL en mode symétrique présent sur lesdits deux conducteurs de phases, en un signal CPL en mode commun présent sur les trois conducteurs de phases.

Selon d'autres caractéristiques,
- ledit circuit (PLA) est disposé entre une prise Ethernet recevant le signal CPL et les deux conducteurs de phases, et comporte un amplificateur à ajustement du gain.
- le convertisseur de signal CPL comporte une interface de couplage en mode symétrique (Int 0) recevant le signal CPL entre lesdits deux conducteurs de phases par l'intermédiaire d'un amplificateur à gain variable, et trois interfaces de couplage en mode commun (Int 1, Int 2, Int 3) reliées chacune à un conducteur de phase.
- entre l'interface de couplage en mode symétrique (Int 0) et les interfaces de couplage en mode commun (Int 1, Int 2, Int 3), le convertisseur comporte un répartiteur contrôlé par un circuit (PLA) comprenant un adaptateur de ligne de puissance, un modem CPL et un microprocesseur.

Avantageusement, le dispositif comporte en outre :
- au secondaire MT du transformateur HT/MT, un modem de télécommunication en ligne de puissance (PLT-1) pour injecter le signal CPL sur un conducteur de phase (Ph2) par l'intermédiaire d'un coupleur,
- au primaire MT du transformateur MT/BT, un modem (PLT-2) pour extraire le signal CPL dudit conducteur de phase (Ph2) et le transmettre à un modem (PLT-3) pour son injection en mode symétrique sur deux conducteurs de phases (Ph1, Ph3).

D'autres caractéristiques ressortent de la description qui suit faite avec référence aux dessins annexés dans lesquels :
la figure 1 est un schéma symbolique simplifié d'un réseau de distribution alimenté par un transformateur MT/BT ;
la figure 2 est un schéma représentatif du dispositif utilisé dans un premier exemple de réalisation de l'invention ;
la figure 3 est un schéma représentatif du dispositif utilisé dans un deuxième exemple de réalisation de l'invention et
la figure 4 est un schéma représentatif du dispositif utilisé dans un troisième exemple de réalisation de l'invention avec transport du signal CPL sur le réseau MT.

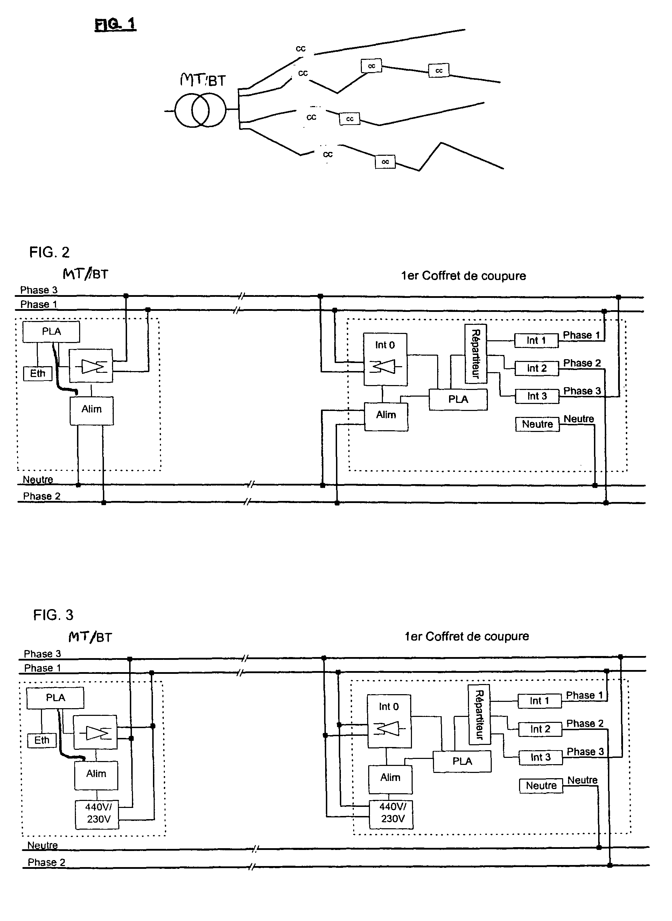

Sur la figure 1, un transformateur MT/BT (20 000 V / 380 V) assure l'alimentation en basse tension (BT) d'un réseau triphasé arborescent desservant les utilisateurs. Sur chacun des brins du réseau sont installés un ou plusieurs coffrets de coupure (cc), dans lesquels sont installés des répéteurs du signal CPL à haute fréquence.

Au niveau du transformateur, sur un jeu de barres libres au secondaire BT, le signal CPL est injecté sur les conducteurs des phases 1 et 3, par exemple, à gauche sur les figures 2 et 3. Cette injection est réalisée au moyen d'un circuit (PLA) comprenant un adaptateur de ligne de puissance, un modem CPL et, éventuellement un microprocesseur, disposé entre la prise Ethernet (Eth) recevant l'information à transmettre, et les conducteurs des phases 1 et 3, au travers d'un amplificateur permettant un ajustement du gain. L'alimentation (Alim) du circuit (PLA) est réalisée entre le conducteur de la phase 2 et le neutre (figure 2) afin de mieux isoler le bruit résiduel. L'alimentation peut aussi être réalisée entre les conducteurs des phases 1 et 3 (figure 3) par l'intermédiaire d'un module de conversion 440 V / 230 V.

Selon l'invention, le signal CPL est injecté au secondaire du transformateur MT/BT, selon un mode symétrique, ce qui permet une transmission du signal CPL sans perturbation par le bruit résiduel, sur la distance comprise entre le transformateur et la zone de desserte des utilisateurs, qui est usuellement de plusieurs centaines de mètres. Cette transmission du signal CPL est assurée tout en limitant l'effet de rayonnement du signal, et en conservant une grande largeur de bande passante en raison de l'absence de répéteur de signal.

Au voisinage de la zone de desserte des utilisateurs, par exemple au premier bâtiment, ou au premier coffret de coupure, est disposé un convertisseur de signal CPL, à droite sur les figures 2 et 3. Ce convertisseur comprend quatre interfaces CPL (Int 0, Int 1, Int 2, Int 3), et un répartiteur placé sous le contrôle d'un circuit (PLA) comprenant un adaptateur de ligne de puissance, un modem CPL et un microprocesseur. L'alimentation (Alim) de l'ensemble du convertisseur est réalisée soit entre le conducteur de la phase 2 et le neutre (figure 2), soit entre les conducteurs des phases 1 et 3 (figure 3) par l'intermédiaire d'un module de conversion 440 V / 230 V.

L'interface 0 de couplage en mode symétrique (Int 0) reçoit le signal CPL entre les conducteurs des phases 1 et 3, par l'intermédiaire d'un amplificateur à gain variable, dont le réglage est accordé avec celui de l'amplificateur à gain variable du circuit (PLA) situé au secondaire du transformateur MT/BT. L'interface (Int 0) est reliée au circuit (PLA).

Le répartiteur a trois sorties, reliées respectivement à chacune des trois interfaces de couplage en mode commun (Int 1, Int 2 et Int 3), qui sont reliées par ailleurs respectivement aux conducteurs des phases 1, 2 et 3. Par ailleurs, une sortie Neutre est reliée au neutre du réseau.

Le convertisseur de signal CPL, ainsi placé au voisinage de la zone de desserte des utilisateurs, réalise une conversion du signal CPL en mode symétrique en provenance du transformateur MT/BT, en un signal CPL en mode commun présent sur les trois conducteurs de phases, et adapté aux besoins des utilisateurs.

Le procédé d'injection d'un signal CPL ainsi décrit présente les avantages du mode symétrique sur la longueur de ligne de transport d'énergie électrique située entre le transformateur MT/BT et la zone de desserte des utilisateurs et les avantages du mode commun dans la zone de desserte des utilisateurs.

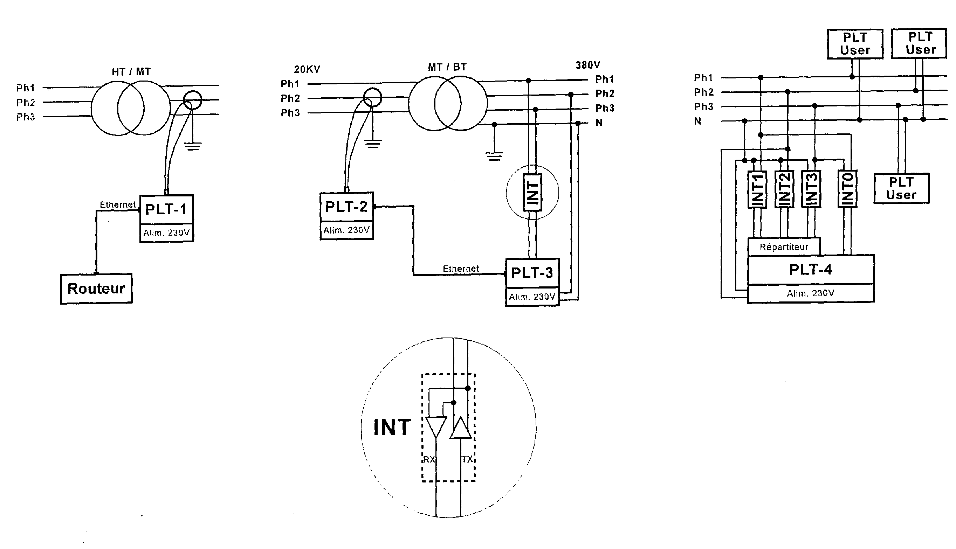

Dans l'exemple de réalisation représenté sur la figure 4, le signal CPL est injecté au secondaire MT d'un transformateur HT/MT, ce qui permet d'alimenter en signal CPL plusieurs transformateurs MT/BT situés en aval du transformateur HT/MT. Au secondaire MT du transformateur HT/MT, un modem de télécommunication en ligne de puissance PLT-1 est relié d'une part à un routeur par son interface Ethernet, d'autre part au conducteur de phase Ph2 par l'intermédiaire d'un coupleur, inductif dans l'exemple représenté, référencé à la terre.

Au voisinage d'un transformateur MT/BT, au primaire MT du transformateur, un modem PLT-2 extrait le signal CPL de la phase Ph2 grâce à un coupleur du même type. Le modem PLT-2 est connecté, grâce à son interface Ethernet, au modem PLT-3. Le modem PLT-3, par l'intermédiaire de son interface INT représentée en vue agrandie dans le cercle, réinjecte le signal CPL en mode symétrique, sur les conducteurs de phases Ph1 et Ph3, au secondaire BT du transformateur MT/BT.

Au voisinage de la zone de desserte, le convertisseur PLT-4 prélève, par l'intermédiaire de son interface INTO, le signal CPL en mode symétrique sur les conducteurs de phase Ph1 et Ph3, et le réinjecte en mode commun, par l'intermédiaire de ses interfaces INT 1, INT 2, INT 3, sur les conducteurs de phases Ph1, Ph2 et Ph3, avec référence au neutre N.

Les utilisateurs sont desservis entre un conducteur de phase et le neutre, par l'intermédiaire d'un modem PLT user.

L'un des exemples d'application du procédé selon l'invention est la connexion au réseau mondial d'utilisateurs situés dans une zone non desservie directement. La connexion de ces utilisateurs au réseau mondial par l'intermédiaire du réseau de distribution d'énergie électrique est réalisée par le procédé décrit avec une grande bande passante et une amélioration importante du débit.

Si les distances sont importantes, des répéteurs peuvent être disposés sur le réseau.

## Revendications

1. Procédé d'injection d'un signal CPL dans un réseau câblé triphasé de transport d'énergie électrique comprenant un transformateur HT/MT et un transformateur MT/BT, dans lequel le signal CPL est injecté au secondaire BT du transformateur MT/BT, entre deux conducteurs de phase, en mode symétrique,
**caractérisé par** les étapes consistant, en outre :
- au voisinage de la zone de desserte des utilisateurs, à convertir le signal CPL du mode symétrique au mode commun,
- à desservir les utilisateurs en signal CPL en mode commun.

2. Procédé selon la revendication 1,
**caractérisé en ce qu'**il comprend les étapes supplémentaires suivantes :
- au secondaire MT du transformateur HT/MT, le signal CPL est injecté par l'intermédiaire d'un coupleur sur un conducteur de phase,
- au primaire MT du transformateur MT/BT, le signal CPL est extrait dudit conducteur de phase pour être injecté en secondaire BT du transformateur MT/BT.

3. Dispositif d'injection d'un signal CPL dans un réseau câblé triphasé de transport d'énergie comportant un transformateur HT/MT et un transformateur MT/BT et desservant des utilisateurs situés dans une zone de desserte,
**caractérisé en ce qu'**il comporte :
- un circuit (PLA) comprenant un adaptateur de ligne de puissance, un modem CPL et, éventuellement un microprocesseur, situé au secondaire du transformateur MT/BT, pour injecter sur deux conducteurs de phases le signal CPL en mode symétrique, et
- un convertisseur de signal CPL, situé au voisinage de la zone de desserte des utilisateurs, pour convertir le signal CPL en mode symétrique présent sur lesdits deux conducteurs de phases, en un signal CPL en mode commun présent sur les trois conducteurs de phases.

4. Dispositif selon la revendication 3,
**caractérisé en ce que** le circuit (PLA) est disposé entre une prise Ethernet recevant l'information à transmettre et les deux conducteurs de phases, et comporte un amplificateur à ajustement du gain.

5. Dispositif selon la revendication 3,
**caractérisé en ce que** le convertisseur de signal CPL comporte une interface de couplage en mode symétrique (Int 0) recevant le signal CPL entre lesdits deux conducteurs de phases par l'intermédiaire d'un amplificateur à gain variable, et trois interfaces de couplage en mode commun (Int 1, Int 2, Int 3) reliées chacune à un conducteur de phase.

6. Dispositif selon la revendication 5,
**caractérisé en ce que**, entre l'interface de couplage en mode symétrique (Int 0) et les interfaces de couplage en mode commun (Int 1, Int 2, Int 3), le convertisseur comporte un répartiteur contrôlé par un circuit (PLA) comprenant un adaptateur de ligne de puissance, un modem CPL et un microprocesseur.

7. Dispositif selon la revendication 3,
**caractérisé en ce qu'**il comporte en outre,
- au secondaire MT du transformateur HT/MT, un modem de télécommunication en ligne de puissance (PLT-1) pour injecter le signal CPL sur un conducteur de phase (Ph2) par l'intermédiaire d'un coupleur,
- au primaire MT du transformateur MT/BT, un modem (PLT-2) pour extraire le signal CPL dudit conducteur de phase (Ph2) et le transmettre à un modem (PLT-3) pour son injection en mode symétrique sur deux conducteurs de phases (Ph1, Ph3).
